# EUROPÄISCHE PATENTSCHRIFT

(11) **EP 3 738 664 B1**
(45) Veröffentlichungstag und Bekanntmachung des Hinweises auf die Patenterteilung: **26.07.2023**
(21) Anmeldenummer: 19000237.8
(22) Anmeldetag: 15.05.2019
(51) Int. Cl.: B01D 63/10, B01D 65/00

(54) **VORRICHTUNG ZUM FILTERN UND TRENNEN VON UNTER DRUCK BEFINDLICHEN LIQUIDEN GEMISCHEN MITTELS MEMBRANEN**
DEVICE FOR FILTERING AND SEPARATING PRESSURISED LIQUID MIXTURES USING MEMBRANES
DISPOSITIF DE FILTRAGE ET DE SÉPARATION DES MÉLANGES LIQUIDES SOUS PRESSION AU MOYEN DES MEMBRANES

(43) Veröffentlichungstag der Anmeldung: 18.11.2020
(73) Patentinhaber: R.T.S. ROCHEM Technical Services GmbH, 21107 Hamburg (DE)
(72) Erfinder: Faiga, Ralf, 21079 Hamburg (DE)
(74) Vertreter: VKK Patentanwälte PartG mbB

(56) Entgegenhaltungen:
- WO-A1-02/45828
- DE-U1-202008 014 306
- JP-A- H11 159 619
- US-A1- 2010 140 161
- US-A1- 2011 192 781
- US-A1- 2011 233 126
- US-A1- 2016 038 881
- US-B1- 6 224 767

## Beschreibung

Die Erfindung betrifft eine Vorrichtung zum Filtern und Trennen von unter Druck befindlichen liquiden Gemischen mittels Membranen, umfassend einen druckdichten Behälter, in dem die Membranen druckdicht aufgenommen werden, sowie wenigstens einen Einlaß für das Gemisch und wenigstens einen Auslaß für das aus dem Gemisch mittels der Membranen abgetrennte Permeat und wenigstens einen Auslaß für das Retentat.

Eine Vorrichtung dieser Art ist bekannt ( EP-A-3 437 724 ). Das vorgenannte Dokument ist lediglich beispielhaft für den existierenden umfangreichen Stand der Technik auf dem Gebiete der Vorrichtungen zum Filtern und Trennen von unter Druck befindlichen liquiden Gemischen mittels Membranen, vgl. US 2011 192 781 A1, WO 0245828 A1, US 2011 233 126 A1, US 2016 038 881 A1, US 2010 140 161 A1, DE 2020 080 143 06 U, US 6 224 767 B1. Diese Vorrichtungen werden in allen Bereichen eingesetzt, wo liquide Gemische, d.h. aus mehreren Bestandteilen bzw. Inhaltsstoffen bestehende Flüssigkeiten, aber auch gasförmige Gemische in ihre Bestandteile getrennt werden müssen. Vorrichtungen dieser Art werden bspw. in der Meerwasserentsalzung verwendet, d.h. wo die Erzeugung von Trinkwasser aus Meerwasser nötig ist. Vorrichtungen dieser Art werden aber auch zur Trennung von sogn. Sickerwasser und die Trennung in seine Bestandteile verwendet, wobei dieses Sickerwasser bspw. in Mülldeponien austritt und nicht ohne weiteres an die Umgebung abgegeben werden kann, da Bestandteile des Sickerwassers gesundheitsgefährdend sind oder sogar toxisch. Schließlich werden Vorrichtungen dieser Art auch in der Industrie zur Reinigung und zur Trennung von Prozeßwasser eingesetzt, das im Zuge der Herstellung chemischer Produkte anfällt und ebenfalls nicht ohne Weiteres an die Umwelt bzw. in kommunale Abwassersysteme eingeleitet werden kann. Nahezu alle liquiden Gemische, wie sie beispielhaft vorangehend dargestellt sind, können mit diesen membrangestützten Verfahren getrennt bzw. gefiltert werden, wobei je nach Art des zu trennenden liquiden Gemisches verschiedene Membrantrennmethoden wie Nanofiltration, Ultrafiltration und Umkehrosmose bzw. Mischformen dieser Trennmethoden zur Anwendung kommen, je nach dem zu trennenden liquiden Gemisch und der damit einhergehenden abgestimmten Konfigurierung der dafür herangezogenen Membranen.

Allen diesen Trennmethoden mittels der erfindungsgemäßen Vorrichtung ist zu eigen, daß der Transport des zu trennenden liquiden Gemisches über bzw. durch die Membran mit sehr hohen Drücken erfolgen muß, bspw. bis in den Bereich weit über 120 bar. Demzufolge muß die Vorrichtung so druckstabil sein, daß sie diesen Förderdrucken des zu trennenden liquiden Gemisches durch die Vorrichtungen bzw. durch die Membranen fortwährend standhält, denn ein Druckverlust während des Betriebes der Vorrichtung führt zu einem vollständigen Ausfall der Vorrichtung. Das kann bei abgesetzt von schnellen Reparaturmöglichkelten, bspw. auf marinen Einrichtungen oder abgesetzt von zugänglichen Orten installierten Vorrichtungen dieser Art fatale Folgen haben, so daß ein Hauptaugenmerk zur Gewährleistung der fortwährenden Betriebssicherheit auf den Behälter der Vorrichtung gerichtet wird, in der die Membranen, unabhängig von der Art der Membranen (Wickelmembranen, Flachmembranen) druckdicht bei den vorerwähnten extrem hohen Gemisch- bzw. Feed-Drücken aufgenommen werden müssen.

Aus diesem Grunde sind die Behälter bisher aus relativ dickwandigem, vergütetem Stahl hergestellt, dessen spezifisches Gewicht bekanntermaßen sehr hoch ist, wobei der Stahlwerkstoff auch gewährleistet, daß der Behälter durch die Gemischbestandteile nicht chemisch angegriffen werden kann und fortwährend eine Korrosionssicherheit gewährleistet ist. Neben dem hohen Gewicht ist der bisher herangezogene vergütete Stahl für die Ausbildung des Behälters sehr kostspielig und in der mechanischen Bearbeitung ebenfalls sehr kostenträchtig.

Bei industriell bzw. gewerblich konfigurierten Anlagen mit der erfindungsgemäßen Vorrichtung sind Anlagen erforderlich, die eine Vielzahl von Vorrichtungen aufweisen, die batterieartig in Schiffen oder Explorationsplattformen im Meer aufgrund des Behälterwerkstoffes wie dem vergüteten Stahl extrem hohe Massen bzw. ein extrem hohes Gewicht zeitigen, von den damit verbundenen sehr hohen Werkstoffkosten ganz zu schweigen.

Es ist Aufgabe der vorliegenden Erfindung eine Vorrichtung zu schaffen, die bei gleicher Betriebssicherheit wie bisher mit einer sehr viel geringeren Masse bzw. Gewicht und sehr viel preisgünstiger als bisher realisiert werden kann, wobei die Betriebssicherheit gegenüber dem jetzigen Stand keinerlei Einbußen erfährt und die absolute Druckdichtigkeit des Behälters auch bei extrem hohen Betriebsdrücken über 120 bar fortwährend gewährleistet ist.

Die Aufgabe wird gelöst durch eine Vorrichtung gemäß Anspruch 1.

Die Fachwelt auf diesem Gebiete war bisher aufgrund theoretischer Modelle und Berechnungen der Meinung, daß Kunststoff generell diese sehr hohen Ansprüche auf Druckbelastbarkeit nicht erfüllen kann und man hat sogar von Versuchen abgesehen, die extrem druckstabilen Behälter für derartige Vorrichtungen aus künstlich hergestellten Werkstoffen auszubilden.

Diese Behälter aber dennoch aus Kunststoff auszubilden, hat den sehr großen Vorteil, daß der Kunststoff im Vergleich zu dem bisher verwendeten vergüteten Stahl den Vorteil hat, daß dieser sehr viel leichter ist (20-30% Gewicht gegenüber einem Behälter aus vergütetem Stahl), und der Kunststoff, geeignet gewählt, sowohl chemisch in Abstimmung mit dem zu trennenden liquiden Gemisch neutral ist, genau wie vergüteter Stahl, und die Gestehungskosten und die Bearbeitungskosten von Kunststoff zur Ausbildung des druckdichten Behälters sehr viel geringer sind als bei der Herstellung von druckdichten Behältern aus vergütetem Stahl.

Erfindungsgemäß werden somit auch nicht nur die Herstellungskosten erheblich reduziert, sondern auch neue Einsatzfelder für die Vorrichtung ermöglicht, da diese sehr viel leichter als bisher ausgebildet werden kann, wovon auch der Einsatz im marinen Bereich sehr stark erweitert wird.

Versuche und auch Versuchseinsätze im praktischen Einsatz haben ergeben, daß es außerordentlich vorteilhaft ist, als Kunststoffwerkstoff Epoxidharz zu verwenden, der im ausgehärteten Zustand extrem hohen Drücken standzuhalten vermag, wobei Epoxidharz aufgrund seiner weiten Verbreitung im Stand der Technik und bei verhältnismäßig gerigem Gewicht sehr kostengünstig bereitstellbar ist und zudem verhältnismäßig einfach verarbeitbar ist.

Es gibt eine Vielzahl von Expoxidharzen, die unter dem Begriff Epoxidharz zusammengefaßt werden. Es hat sich aber als vorteilhaft herausgestellt, aus der Menge der Epoxidharze für die Erfindung den Kunststoff Aramid [Poly(1,4-Phenylen-terephthalaramid)] zu verwenden. Das Gewicht, Festigkeit, und kostengünstige Bereitstellbarkeit sind bei dieser Epoxidharz-Variante ganz besonders vorteilhaft, d.h. dessen Gewicht im Verhältnis zur erreichbaren Festigkeit und eine leichte Verarbeitbarkeit und eine kostengünstige Bereitstellbarkeit.

Sollen allerdings druckdichte Behälter angenommen werden, die allerhöchsten Prozeßdrücken für das liquide Gemisch standhalten können, bei denen auch eine geringe Masse bzw. ein geringes Gewicht des Behälters angestrebt werden, ist es sehr vorteilhaft, als Kunststoffwerkstoff für die Ausbildung des druckdichten Behälters Kevlar (eine international registrierte Marke der Firma Du Pont) zu wählen. Es ist bekannt, daß Kevlar eine höhere Stabilität als bspw. vergüteter Stahl aufweist bei höchstens 1/5 des Gewichtes gegenüber einem Behälter aus vergütetem Stahl.

Um den druckdichten Behälter aus Kunststoff auszubilden kann es sehr vorteilhaft sein, diesen Kunststoff faserverstärkt auszubilden, wobei diese Verstärkungsfasern vorteilhafterweise aus Glasfasern bzw. einem Glasgewebe bestehen, das bei der Formgebung des Behälters integriert wird, es kann aber auch gemäß einer anderen vorteilhaften Ausgestaltung sinnvoll sein, wenn noch höhere Anforderungen an die Stabilität des Kunststoffwerkstoffs gestellt werden, die Verstärkungsfasern aus Kohlefasern auszubilden, wobei die Kohlefasern ebenfalls im Zuge der Herstellung des Behälters im Kunststoff eingelagert werden können, entweder in Form von Fasern oder gewebeartigen Strukturen.

Gemäß einer vorteilhaften Ausführungsform der Vorrichtung wird der Kunststoffwerkstoff aus Polyvinylchlorid PVC hergestellt. Aus der Menge der bekannten Kunststoffe, wie sie bspw. für druckfeste mechanische Bauteile herangezogen werden können, ist Polyvinylchlorid verhältnismäßig kostengünstig bereitstellbar und auch mechanisch verhältnismäßig einfach bearbeitbar. Den druckdichten Behälter der Vorrichtung aus Polyvinylchlorid auszubilden, wird bspw. ausgewählt, wenn nicht die allerhöchsten Prozeßdrücke für das liquide Gemisch angenommen werden müssen.

Obwohl der druckdichte Behälter, je nach Anwendung, aus verschieden ausgebildeten konstruktiven Strukturen realisiert werden kann, wird der Behälter vorteilhafterweise als rohrförmiges Element mit im wesentlichen kreisförmigem Querschnitt ausgebildet, was in bezug auf die Fertigung des Behälters sehr zweckmäßig ist, denn der Behälter kann als erfindungsgemäßes Behälterrohr vorkonfektioniert ausgebildet werden und nur noch der entsprechenden gewünschten Länge abgelängt werden.

Gemäß einer noch anderen vorteilhaften Ausgestaltung der Vorrichtung ist der Einlaß für das zu trennende Gemisch auf einem in den Behälter über eine erste Öffnungsseite einführbaren ersten Endelement ausgebildet, d.h. der Einlaß als solcher ist konstruktiv unabhängig von dem eigentlichen druckdichten Behälter, d.h. der Behälter braucht für das Vorsehen des Einlasses nicht mechanisch bearbeitet zu werden, da er unabhängig vom Behälter auf dem ersten Endelement ausgebildet ist und das erste Endelement im Zuge der Montage oder der Demontage in das Behälterinnere eingesetzt wird bzw. aus dem Behälterinneren genommen werden kann.

Aus diesem Grunde ist es ebenfalls vorteilhaft, daß der Auslaß für das durch die bzw. in dem Membranelement erzeugte Permeat auf einem in den Behälter über eine zweite Öffnungsseite aufnehmbaren zweiten Endelement ausgebildet ist, wobei hier ebenfalls der Vorteil besteht, daß für den Auslaß eine Bearbeitung des eigentlichen druckdichten Behälters nicht erforderlich ist, d.h. völlig unabhängig von dem Behälter in das Behälterinnere über das zweite Endelement gebracht bzw. aus diesem herausgezogen werden kann. Schließlich ist es ebenfalls vorteilhaft, daß der Auslaß für das durch die Membranelemente gebildete, die Vorrichtung verlassende aufkonzentrierte Retentat auf einem in den Behälter über eine zweite Öffnungsseite aufnehmbaren zweiten Endelement ausgebildet ist, wobei für diesen Ausgang des Retentats ebenfalls das zweite Endelement die konstruktive Basis bildet wie ebenfalls für den Auslaß des durch die Membranelemente erzeugten Permeats. Der Behälter als solcher wird durch mechanische Bearbeitung somit nicht geschwächt, so daß gewährleistet ist, daß er fortwährend beschädigungslos druckdicht für den Trennprozeß für das liquide Gemisch ist, bzw. druckdicht gehalten werden kann.

Bei den bekannten Behältern aus vergütetem Stahl war zur Gewährleistung eines fortwährenden Andrucks in axialer Richtung und infolgedessen des radialen Andrucks eines mit der Innenwand des Behälters zusammenwirkenden Dichtelements gewährleistet, d.h. es mußte quasi ein Innengewinde beidseitig im Bereich der Öffnung des Behälters ausgebildet werden, d.h. eine quasi Mutter in jedem inneren Endteil des Behälters. Die Ausbildung der Innengewinde ist sehr kostspielig und erfordert einen sehr hohen Aufwand an Präzision zur Ausbildung der Innengewinde. Das wird erfindungsgemäß vollständig vermieden.

Ganz besonders vorteilhaft ist es, daß dem ersten und dem zweiten Endelement in Richtung der jeweiligen Öffnungsseite vorgelagert jeweils ein erstes und ein zweites Andruckelement angeordnet ist, das zur Anlage jeweils an das erste und zweite Endelement kommt. Diese Andruckelemente gewährleisten, daß die Endelemente mit dem für das Dichteerfordernis im Inneren des Behälters in axialer Richtung und in radialer Richtung erforderliche Dichtigkeit des Raumes, in dem die Membranen im Behälter angeordnet sind, gewährleistet wird. Die Andruckelemente haben lediglich die Aufgabe, eine geeignete axiale zur Achse des Behälters parallel gerichtete Kraft zu erzeugen bzw. zu gewährleisten, damit der eingentliche Raum, in dem die Membranen im Innenraum des Behälters angeordnet sind, hermetisch gegenüber dem Äußeren bzw. der Umgebung abzudichten.

Um eine schnelle Montage und eine Demontage der Vorrichtung zu gewährleisten und aufwendige Montage- und Demontageschritte auszuschalten, ist es außerordentlich vorteilhaft, daß das in das Innere des Behälters einführbare und aufnehmbare aus Membranelementen an bei den Öffnungsseiten des Behälters mit jeweils einem Segerring lösbar positioniert werden kann, der in jeweils eine in Umfangrichtung im Inneren des Behälters ausgebildete jeweilige Umfangsnut lösbar eingreift. Der Vorteil ist, daß keine sonstigen mechanischen Vorkehrungen am Behälter getroffen werden müssen, um das aus Membranelementen sicher im Inneren des Behälters aufzunehmen und auch im Zuge einer Reparatur oder einer Wartung aus dem Behälter heraus bewegen zu können. Lediglich eine geeignet ausgebildete Zange oder Vorrichtung zur Erfassung des Segerrings und zum Zusammenbiegen, daß dieser in die jeweilige Nut eingreift, mit dem er geringfügig zusammengedrückt werden kann, ist erforderlich.

Um einerseits Fertigungstoleranzen bei der Ausbildung des Behälters ausgleichen zu können, aber auch um den axialen Druck auf das Membranelementepacket fortwährend sicher gewährleisten zu können, ist es gemäß einer noch anderen vorteilhaften Ausgestaltung der Vorrichtung zweckmäßig, zwischen dem Segerring an der ersten Öffnungsseite des Behälters und dem ersten Andruckelement einen scheibenförmigen Justierplansch anzuordnen, der für eine bestimmungsgemäße axiale Druckkomponente auf das Andruckelement und über das Endelement wirkt, wobei der Justierflansch eine Mehrzahl von zur Achse des Behälters axialer Gewindelöcher aufweist, die von der ersten Öffnungsseite betätigbare Schrauben aufnehmen, und wobei die Schrauben durch axiale Verschiebung das Endelement und somit das Andruckelement axial verschieben können, um eine Dichtigkeit des Innenraumes, in dem das Paket aus Membranen angeordnet ist, hermetisch abgedichtet gegenüber der äu-ßeren Umgebung zu halten. Die Schrauben dienen auch der Justage bei der Montage der einzelnen Vorrichtungskomponenten, die im Innenraum des Behälters bestimmungsgemäß zu liegen kommen.

Das Paket aus beiderseitigen Andruckelementen sowie der dazwischen angeordneten Membranen muß bei den im Stand der Technik bekannten Konstruktionen des mit den besagten Innengewinden an den Öffnungsseiten des Behälters ausgebildeten Muttern sowie den Andruckelementen oder dergleichen an ihrem radialen äußeren angebrachten Gewinde, mit dem es in das Innengewinde des Behälters eingreift, von Zeit zu Zeit während des Betriebes einer derartigen Vorrichtung nachgespannt werden, um eine fortwährende Dichtigkeit des Behälterinnenraumes zur Umgebung zu gewährleisten. Das ist außerordentlich aufwendig, da die Innengewinde zu sich selbst gegenläufig sind und ein Nachspannen mit sehr hohem Aufwand erforderlich ist. Mittels dem erfindungsgemäßen Justierflansch, der eine Mehrzahl von zur Achse des Behälters axialen Gewindelöchern aufweist, ist ein einfaches Nachspannen in axialer Richtung der Andruckelemente bzw. des Paketes schlechthin im Behälterinnenraum sehr vereinfacht und kann auch präziser durchgeführt werden als bei den im Stand der Technik bekannten Konstruktionen mit Innengewinden an den beiderseitigen Öffnungen des Behälters.

Das erste und das zweite im wesentlichen tellerförmig ausgebildete Endelement weist eine in seinem radialen Umfang umschließende Nut zur Aufnahme eines Dichtelementes auf, wobei dieses Dichtelement quasi als umlaufende Dichtlippe den Innenraum des Behälters, in dem die Membranelemente angeordnet sind, gegenüber der Innenwandung abdichtet, d.h. bei geeignet ausgebildetem axialen Druck verformt sich das Dichtelement in der Nut radial nach außen. Vorteilhafterweise sind die Dichtelemente im Querschnitt als Lippendichtungen aus elastomerem Kunststoff ausgebildet.

Die erfindungsgemäße Vorrichtung eignet sich zur Aufnahme beliebiger geeigneter und geformter Membranelemente, vorteilhaft jedoch ist es, die Membranen im Behälter in Form einer Wickelmembraneinheit zu konfigurieren, die im Zuge der Montage bzw. der Demontage lediglich in das Innere des Behälters eingeführt zu werden braucht bzw. radial aus diesem im Zuge der Reparatur oder Wartung heraus gezogen werden kann.

Für bestimmte Anwendungsfälle sind jedoch auch Flachmembranen vorteilhaft zu verwenden, wobei in diesem Falle die Membranen im Behälter in Form einer Flachmembraneinheit konfiguriert sind, und wobei die Flachmembran nach Art eines Stapels aufeinander gestapelt sind. Ein typischer Flachmembranstapel in der gattungsgemäßen Vorrichtung ist in der schon oben erwähnten EP-A-3 437 724 beschrieben, bei dem das zu trennende liquide Gemisch vom Einlaß des Gemisches zum Auslaß für das Retentat mäanderförmig durch den Membranstapel gleitet und, jede Membran dabei von der einen bis zur anderen Seite überstreichend oder ggf. auch in Parallelschaltung parallel durchläuft bei bestimmter Konfiguration der Membranelemente.

Die Membranelemente selbst sind gemäß einer vorzugsweisen Ausführung der Vorrichtung als Kissenmembran ausgebildet, unabhängig davon, ob die Flachmembraneinheit im Behälter zur Anwendung kommt, oder aber die Wickelmembraneinheit, denn auch die Wickelmembranen können auch als Kissenmembranen ausgebildet sein.

Die gesamte Einheit im Inneren der Vorrichtung, die in den Behälter eingeführt wird bzw. aus diesem entnommen werden kann, kann in ihrer Gesamtheit vorzugsweise durch einen Spannbolzen unter Druck zusammengehalten werden, wobei die Membraneinheit selbst auch vorzugsweise von dem Spannbolzen axial durchquert wird, so daß Spannbolzen, Membraneinheit und die Endelemente, die Andruckelemente und der Justierflansch eine Einheit bilden, die ausserhalb des Behälters komplett funktionsfähig konfiguriert werden kann.

Schließlich kann der Spannbolzen derart gestaltet sein, daß das von den Membranen abgeschiedene Permeat über den Spannbolzen zum Permeatauslaß geführt wird, was den Vorteil hat, das keine weiteren Vorkehrungen konstruktiver Art getroffen werden müssen, um den Permeatfluß aus den Membranelementen zu sammeln und aus der Vorrichtung herauszuführen, was bspw. dadurch geschehen kann, daß der Spannbolzen über seinem Umfang verteilt axiale Nuten aufweist, über die das von den Membranelementen zufließende Permeat gesammelt und aus der Vorrichtung herausgeführt werden kann.

Die Erfindung wird nun unter Bezugnahme auf die nachfolgenden schematischen Zeichnungen anhand eines Ausführungsbeispieles eingehend beschrieben.

Darin zeigen:
- Fig. 1: im Schnitt eine Vorrichtung, bei der die Membranen in Form einer Wickelmembraneinheit angeordnet sind,
- Fig. 2: eine Draufsicht auf die erste Öffnungsseite des Behälters mit eingesetztem Segerring sowie eingesetztem Justierflansch,
- Fig. 3: eine Draufsicht auf die andere, zweite Öffnungsseite des Behälters mit eingesetztem Segerring,
- Fig. 4: im Schnitt eine eigentliche Wickelmembraneinheit, wie sie im Behälter positioniert werden kann,
- Fig. 5: eine Ansicht von oben (Stirnseite) der Wickelmembraneinheit von Fig. 4 und
- Fig. 6: in perspektivischer Darstellung das erste bzw. zweite Endelement.

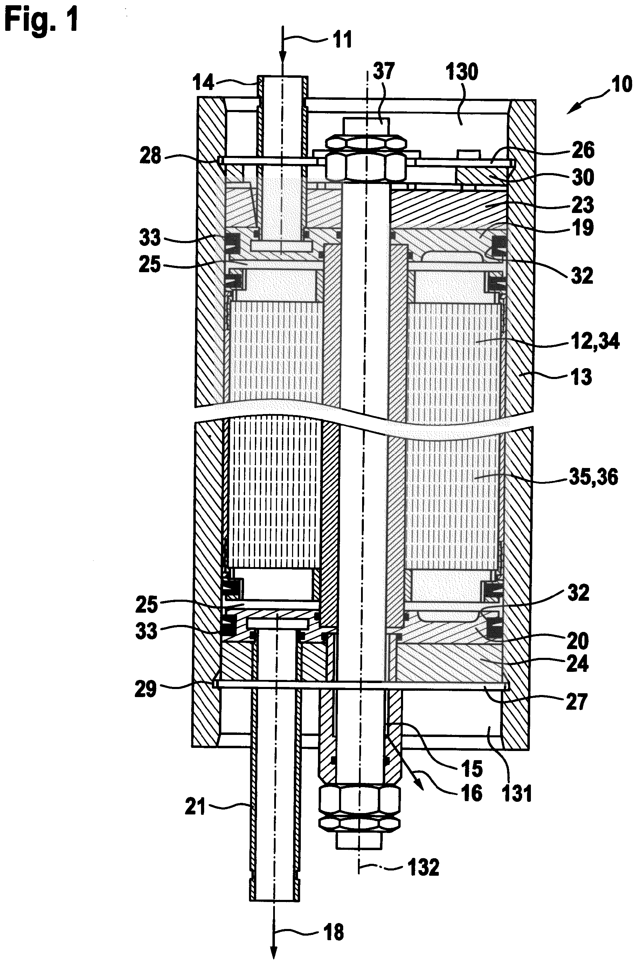

Es wird zunächst Bezug genommen auf die Fig. 1, die die Vorrichtung 10 im Schnitt darstellt. Vorangehend sei darauf verwiesen, daß Vorrichtungen 10 dieser gattungsgemäßen Art im Stand der Technik ansich bekannt sind, d.h. im grundsätzlichen Aufbau, so daß auf spezifische Eigenheiten hier im Zusammenhang mit der Beschreibung Vorrichtung 10 nicht eingegangen werden muß. Diese Vorrichtungen 10 dienen zum Filtern und Trennen von liquiden Gemischen, wobei diese liquiden Gemische Flüssigkeiten aber auch gasförmige Gemische sein können. Die Trennung des Gemisches 11 wird innerhalb der Vorrichtung 10 mittels Membranen 12 bewerkstelligt, wobei diese Membranen 12 ansich im Stand der Technik bekannte Polymermembranen sind, die bspw. für die Methode der Nanofiltration, Ultrafiltration oder Umkehrosmose ausgebildet sind.

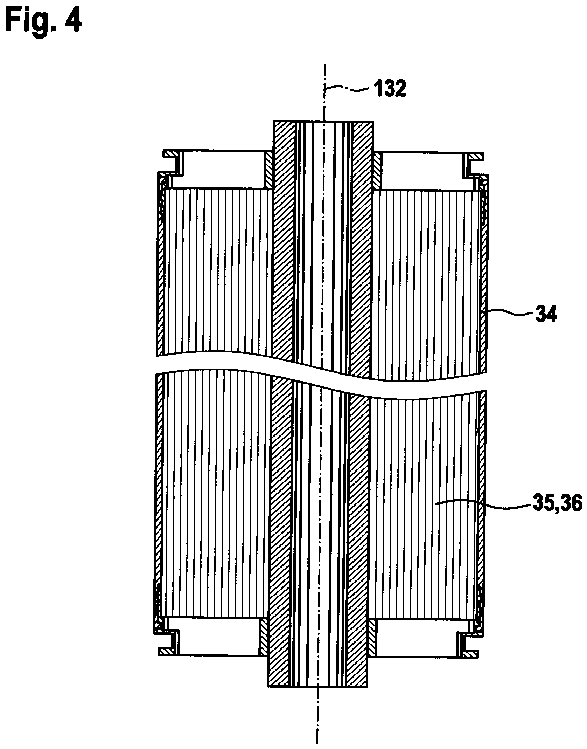

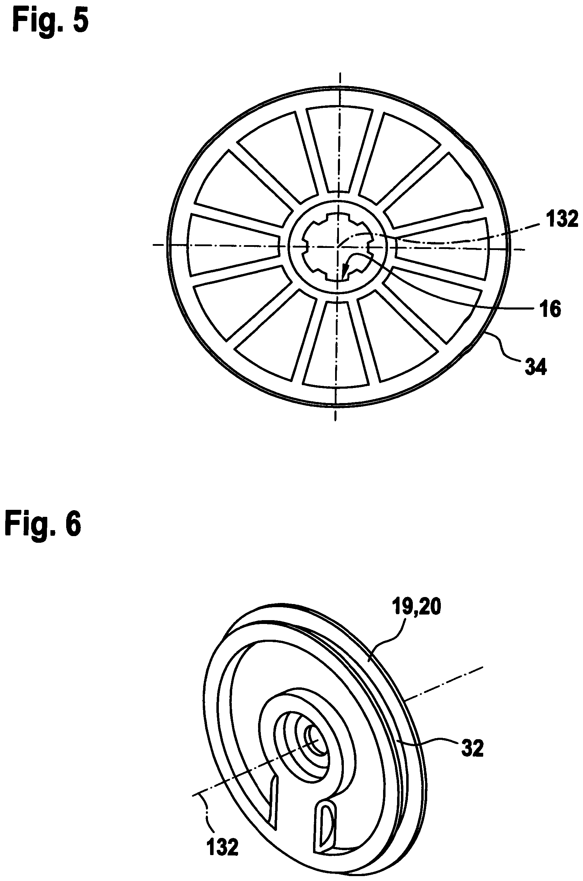

In Fig. 1 sind die Membranen 12 im Behälter 13 in Form einer Wickelmembraneinheit 34 konfiguriert aufgenommen, wie sie bspw. in den Fig. 4 und 5 dargestellt ist. Es ist aber auch möglich, die Vorrichtung 10, derart zu konfigurieren, daß dort eine Flachmembraneinheit 35 aufgenommen wird. Die Flachmembranen 35 sind nach Art eines Stapels aufeinandergestapelt, wobei regelmäßig das zu trennende liquide Gemisch 11 mäanderförmig die aufeinandergestapelten Membranelemente 12 überstreichen und am Endes Stapels als Retentat 18, auch Konzentrat genannt, die Vorrichtung 10 verläßt.

Bei der Verwendung einer Wickelmembraneinheit 34 im Behälter 13 wird das zu trennende Gemisch 11 axial durch die Gesamtheit der Membranwickel ohne interne Umlenkung über den gesamten Bereich der Wickelmembran parallel gefördert, wobei hier auch das Retentat 18 in seiner Gesamtheit axial die Wickelmembraneinheit 34 verläßt und aus der Vorrichtung 10 ausgeführt.

Der Behälter 13, in dem die Wickelmembraneinheit 34 bzw. die Flachmembraneinheit 35 von einer ersten Öffnungsseite 130 im Zuge der Montage axial eingeführt wird, ist derart durckdicht ausgebildet, daß z.B. Innendrücke im Innenraum 25 des Behälters 13, mittels der das unter Druck befindliche liquide Gemisch 11 über einen Einlaß zugeführt wird, Drücke von mehr als 120 bar standhalten kann. Diese hohen Betriebsdrücke sind fortwährend bei dem bestimmungsgemäßen Betrieb der Vorrichtung 10 im Innenraum 25 des Behälters 13 wirkend, wobei die das zugeführte liquide Gemisch 11 mittels diesem Druck über die Membranelemente 12 geleitet wird. Aus dem Behälter 13 wird das Retentat 18 über einen Auslaß 21 herausgeführt.

Der Behälter 13 wird als rohrförmiges Element ausgeführt und weist einen im wesentlichen kreisförmigen Querschnitt auf, wobei der kreisförmige Querschnitt eine gute radiale Stabilität des Behälters 13 gewährleistet.

Obwohl im Prinzip alle bekannten Membrankonstruktionen sich zum Einsatz in der erfindungsgemäßen Vorrichtung 10 eignen, werden als Membranelemente 12 sogn. Kissenmembranen verwendet, d.h. Kissenmembranen sowohl für die Ausbildung der Wickelmembraneinheit als auch für die Ausbildung der Flachmembraneinheit, d.h. der einzelnen dort verwendeten Kissenmembranen. Die Kissenmembranen weisen charakteristisch eine Abfuhröffnung auf, über die das im Kissen gesammelte, erzeugte Permeat abgeführt wird, was sowohl für die Membran als Wickelmembraneinheit als auch für die Kissenmembranen der Flachmembraneinheit gilt.

Bei der Ausführungsform der Vorrichtung 10 gemäß der Fig. 1 wird das Permeat 16 zentral gesammelt und zu einem Auslaß 15, dem Permeatauslaß, geführt, wobei das Permeat 16 dann zur weiteren Verwendung aus der Vorrichtung 10 herausgeführt wird.

Spezifisch für die dargestellte Vorrichtung 10 ist, daß der Einlaß für das zu trennende Gemisch 11 auf einem über den Behälter 13 über eine erste Öffnungsseite 130 aufnehmbaren ersten Endelement 19 ausgebildet ist, wobei der Auslaß 15 für das durch die bzw. in den Membranelementen 12 erzeugte Permeat auf einem in den Behälter 13 über eine zweite Öffnung 131 aufnehmbaren zweiten Endelement 20 ausgebildet ist. Ebenfalls ist der Auslaß 21 für die Membranelemente 12 und somit die das Vorrichtung 13 verlassende Retentat 18 auf einem in den Behälter 13 über eine zweite Öffnungsseite 131 aufnehmbaren zweiten Endelement 20 ausgebildet.

Dem eigentlichen dichtenden Andruck der beiden Endelemente in axialer Richtung, die Achse 132 ist eine gedachte Achse durch den Behälter 13, die auch die Achse der Membraneinheit 34, 35 bzw. den Behälter 13 axial durchgeführter Spannbolzen 37 bildet, wird durch erste und zweite Andruckelemente 23, 24 gebildet, wobei dem ersten und dem zweiten Endelement 19, 20 in Richtung der jeweiligen Öffnunsseiten 130, 131 die beiden Andruckelemente 23, 24 vorgelagert sind und die zur Anlage jeweils an das erste und an das zweite Endelement 19, 20 kommen.

Die Fixierung des Pakets der aus Membranelementen bestehenden Wickelmembraneinheit 34 bzw. Flachmembraneinheit 35 im Inneren 25 des Behälters, nach dem dieses Paket einschließlich der jeweiligen End- und Andruckelemente in den Innenraum 25 eingeführt sind, und zwar über die eine oder die andere Öffnungsseite 130, 131 des Behälters 13, erfolgt mittels eines jeweiligen Segerrings 26, 27, der lösbar im Innenraum 25 fixierbar ist, und zwar in jeweils eine in Umfangsrichtung im Inneren 25 des Behälters 13 ausgebildete jeweilige Umfangsnut 28, 29 eingreifend. Durch die Segerringe 26, 27 wird auf einfache Weise das aus Andruckelementen, Endelementen, sowie den Membraneinheiten, unabhängig von der Art der verwendeten Membraneinheiten, auf einfache Weise sicher in den Innenraum 25 des Behälters 13 lösbar fixiert.

Zwischen dem Segerring 26 an der ersten Öffnungsseite gemäß der Darstellung der Vorrichtung 10 in Fig. 1 des Behälters 13 und dem ersten Andruckelement 23 ist ein scheibenförmig ausgebildeter Justierflansch 30 angeornet. Der Justierflansch 30 weist eine Mehrzahl von zur Achse 132 des Behälters 13 axiale Gewindelöcher 31 auf, in die entsprechend bewegbare Justierschrauben eingreifen. Somit kann durch Betätigung der Justierschrauben eine axiale geringfügige Verschiebung der Andruckelemente 23, 24 und somit der ersten und zweiten Endelemente 19, 20 bewirkt werden, denn über ein zentrales axiales Rohr der Wickelmembraneinheit 34 aber auch über ein analog angeordnetes zentrales, axiales Rohrelement bei der Verwendung einer Flachmembraneinheit 35 wird die axiale Kraft auf das zweite Endelement 20 und das zweite Andruckelement 24 durch axiale Verschiebung der Schrauben bei ihrer Betätigung gewährleistet.

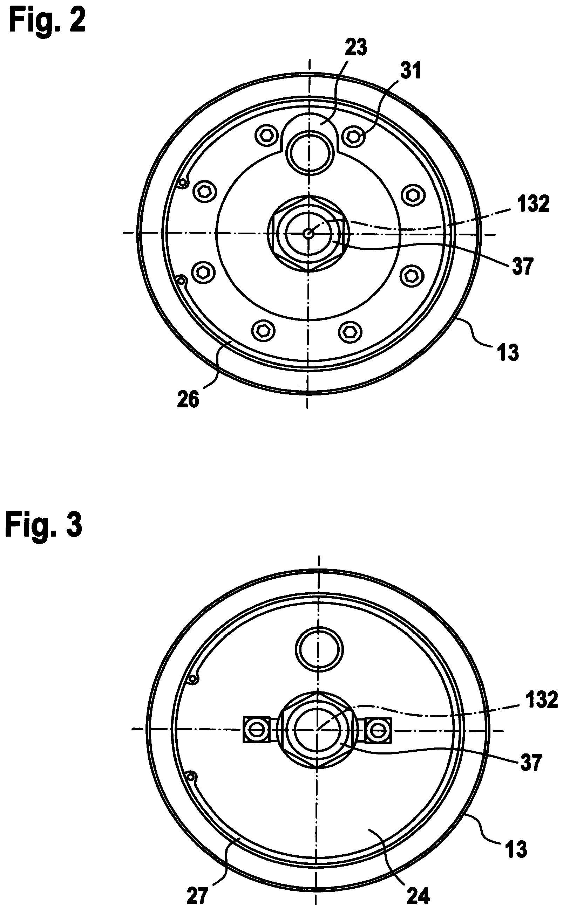

Das Justierelement 31 stützt sich auf dem sich in der inneren ersten Umfangsnut 28 im Behälter 13 ab. Das ist in den Fig. 2 und 3, die die Ansichten auf die eine erste Öffnungsseite 130, Fig. 2 und auf die andere zweite Öffnungsseite 131, Fig. 3, darstellen, die obere bzw. die untere Nut 28, 29.

Die Endelemente 19, 20, vgl. die perspektivische Darstellung gemäß Fig. 6, die im wesentlichen tellerförmig ausgebildet sind, weisen eine ihren radialen Umfang umschließende Nut 32 auf, wobei diese Nut 32 zur Aufnahme eines jeweiligen Dichtelementes 33, vgl. Fig. 1, dient. Die Dichtelemente 33 sind als Lippendichtungen im Querschnitt ausgebildet, es können aber auch andere Querschnittsformen der Dichtelemente Verwendung finden. Der die Wickelmembraneinheit 34 bzw. analog die Flachmembraneinheit 35 axial und zentral durchquerende Spannbolzen 27 kann, obwohl hier nicht dargestellt, axial verlaufende Nuten aufweisen, über die das zentral gesammelte Permeat 16 geleitet und aus der Vorrichtung 10 herausgeführt wird. Bei der Darstellung der Wickelmembraneinheit 34 gemäß den Fig. 4 und 5 sind die Nuten selbst im zentralen Spannrohr der Wickelmembraneinheit 34 ausgebildet, was anhand der Fig. 5 gut ersichtlich ist, so daß bei dieser Ausgestaltung der Vorrichtung 10 der Spannbolzen 37 selbst nutfrei am Umfang glatt ausgebildet sein kann. Der Fluß des Permeats 16 wird in Fig. 1 symbolisch durch den Pfeil dargestellt.

### Bezugszeichenliste

- 10: Vorrichtung
- 11: liquides Gemisch (feed)
- 12: Membran/Membranelement
- 13: Behälter
- 130: erste Öffnungsseite
- 131: zweite Öffnungsseite
- 132: Behälterachse
- 14: Einlaß (Gemischeinlaß)
- 15: Auslaß (Permeatauslaß)
- 16: Permeat
- 17 18: Retentat (Konzentrat)
- 19: erstes Endelement
- 20: zweites Endelement
- 21: Auslaß (Retentatauslaß)
- 23: erstes Andruckelement
- 24: zweites Andruckelement
- 25: Innenraum (Behälter)
- 26: Segerring
- 27: Segerring
- 28: innere Umfangsnut (erste)
- 29: innere Umfangsnut (zweite)
- 30: Justierflansch
- 31: Gewindeloch
- 32: Nut
- 33: Dichtelement
- 34: Wickelmembraneinheit
- 35: Flachmembraneinheit
- 36: Membranstapel
- 37: Spannbolzen

## Patentansprüche

1. Vorrichtung (10) zum Filtern und Trennen von unter Druck befindlichen liquiden Gemischen (11) mittels Membranen (12), umfassend einen druckdichten Behälter (13) in dem die Membranen (12) druckdicht aufgenommen werden, sowie wenigstens einen Einlaß (14) für das Gemisch (11) und wenigstens einen Auslaß (15) für das aus dem Gemisch (11) mittels der Membranen (12) abgetrennte Permeat (16) und wenigstens einen Auslaß (21) für das Retentat (18), wobei der druckdichte Behälter (13) aus einem Kunststoffwerkstoff besteht,
wobei in den Behälter (13) über eine erste Öffnungsseite (130) ein erstes Endelement (19) und über eine zweite Öffnungsseite (131) ein zweites Endelement (20) aufnehmbar ist, wobei ein im Inneren (25) des Behälters (13) einführbares und aufnehmbares Paket der Membranen (12) an der ersten und zweiten Öffnungsseite (130, 131) des Behälters (13) mit jeweils einem Seegerring (26, 27) lösbar positionierbar ist, der in jeweils eine in Umfangsrichtung im Inneren (25) des Behälters (13) ausgebildete jeweilige Umfangsnut (28, 29) lösbar eingreift, wobei zwischen dem Seegerring (26) an der ersten Öffnungsseite (130) des Behälters (13) und einem an dem ersten Endelement (19) zur Anlage kommenden und diesem in Richtung der ersten Öffnungsseite (130) vorgelagerten ersten Andruckelement (23) ein scheibenförmiger Justierflansch (30) angeordnet ist, wobei der Justierflansch (30) eine Mehrzahl von zur Achse (132) des Behälters (13) axialen Gewindelöchern (31) aufweist.

2. Vorrichtung nach Anspruch 1, **dadurch gekennzeichnet, daß** der Kunststoff aus Epoxidharz besteht.

3. Vorrichtung nach Anspruch 1, **dadurch gekennzeichnet, daß** der Kunststoff aus Aramid [Poly(1,4-phenylen-terephthalamid)] besteht.

4. Vorrichtung nach einem oder mehreren der Ansprüche 1 bis 3, **dadurch gekennzeichnet, daß** der Kunststoff faserverstärkt ist.

5. Vorrichtung nach Anspruch 4, **dadurch gekennzeichnet, daß** die Verstärkungsfasern aus Glasfasern bestehen.

6. Vorrichtung nach Anspruch 4, **dadurch gekennzeichnet, daß** die Verstärkungsfasern aus Kohlefasern bestehen.

7. Vorrichtung nach Anspruch 1, **dadurch gekennzeichnet, daß** der Kunststoff aus Polyvinylchlorid PVC besteht.

8. Vorrichtung nach einem oder mehreren der Ansprüche 1 bis 7, **dadurch gekennzeichnet, daß** der Behälter (13) als rohrförmiges Element mit im wesentlichen kreisförmigem Querschnitt ausgebildet ist.

9. Vorrichtung nach einem oder mehreren der Ansprüche 1 bis 7, **dadurch gekennzeichnet, daß** der Einlaß (14) für das zu trennende Gemisch (11) auf dem in dem Behälter (13) über die erste Öffnungsseite (130) aufnehmbaren Endelement (19) ausgebildet ist.

10. Vorrichtung nach einem oder mehreren der Ansprüche 1 bis 9, **dadurch gekennzeichnet, daß** der Auslaß (15) für das durch bzw. die in den Membranelementen (12) erzeugte Permeat (10) auf dem in den Behälter (13) über die zweite Öffnungsseite (131) aufnehmbaren zweiten Endelement (20) ausgebildet ist.

11. Vorrichtung nach einem oder mehreren der Ansprüche 1 bis 9, **dadurch gekennzeichnet, daß** der Auslaß (21) für das durch Membranelemente (12) geleitete, die Vorrichtung (10) verlassende, aufkonzentrierte Retentat (22) auf dem in den Behälter (13) über die zweite Öffnungsseite (131) aufnehmbaren zweiten Endelement (20) ausgebildet ist.

12. Vorrichtung nach einem oder mehreren der Ansprüche 9 bis 11, **dadurch gekennzeichnet, daß** dem zweiten Endelement (19, 20) in Richtung der zweiten Öffnungsseite (131) vorgelagert ein zweites Andruckelement (23, 24) angeordnet ist, das zur Anlage an das zweite Endelement (19, 20) kommt.

13. Vorrichtung nach einem oder mehreren der Ansprüche 1 bis 10, **dadurch gekennzeichnet, daß** das erste und das zweite im wesentlichen tellerförmig ausgebildete Endelement (19, 20) eine seinen radialen Umfang umschließende Nut (32) zur Aufnahme eines Dichtelementes (33) aufweist.

14. Vorrichtung nach einem oder mehreren der Ansprüche 1 bis 13, **dadurch gekennzeichnet, daß** die Membranen (12) im Behälter (13) in Form einer Wickelmembraneinheit (34) konfiguriert sind.

15. Vorrichtung nach einem oder mehreren der Ansprüche 1 bis 13, **dadurch gekennzeichnet, daß** die Membranen (12) im Behälter (13) in Form einer Flachmembraneinheit (35) konfiguriert sind, wobei die Flachmembranen (35) nach Art eines Stapels (36) aufeinandergestapelt sind.

16. Vorrichtung nach einem oder mehreren der Ansprüche 1 bis 14, **dadurch gekennzeichnet, daß** die Membranelemente (12) als Kissenmembranen ausgebildet sind.

17. Vorrichtung nach einem oder mehreren der Ansprüche 14 bis 16, **dadurch gekennzeichnet, daß** die Membraneinheit (34, 35) von einem Spannbolzen (37) axial durchquert wird.

18. Vorrichtung nach Anspruch 17, **dadurch gekennzeichnet, daß** über den Spannbolzen (37) das den Membranen (12) abgeschiedene Permeat (26) zum Permeatauslaß (15) geführt wird.

## Claims

1. Device (10) for filtering and separating pressurized liquid mixtures (11) by means of membranes (12), comprising a pressure-tight container (13) in which the membranes (12) are accommodated in a pressure-tight manner, as well as at least one inlet (14) for the mixture (11) and at least one outlet (15) for the permeate (16) separated from the mixture (11) by means of the membranes (12) and at least one outlet (21) for the retentate (18), wherein the pressure-tight container (13) consists of a plastic material,
wherein a first end element (19) can be received in the container (13) via a first opening side (130) and a second end element (20) can be received in the container (13) via a second opening side (131), wherein a package of the membranes (12), which can be introduced and received in the interior (25) of the container (13), can be releasably positioned at the first and second opening sides (130, 131) of the container (13) by means of a respective retaining ring (26, 27) which engages releasably in a respective circumferential groove (28, 29) formed in the circumferential direction in the interior (25) of the container (13), a disc-shaped adjustment flange (30) being arranged between the retaining ring (26) on the first opening side (130) of the container (13) and a first pressure element (23) which comes to bear at the first end element (19) and is arranged upstream of the latter in the direction of the first opening side (130), the adjustment flange (30) having a plurality of threaded holes (31) which are axial with respect to the axis (132) of the container (13).

2. Device according to claim 1, **characterized in that** the plastic material consists of epoxy resin.

3. Device according to claim 1, **characterized in that** the plastic material consists of aramid [poly(1,4-phenylene-terephthalamide)].

4. Device according to one or more of claims 1 to 3, **characterized in that** the plastic material is fiber-reinforced.

5. Device according to claim 4, **characterized in that** the reinforcing fibers consist of glass fibers.

6. Device according to claim 4, **characterized in that** the reinforcing fibers consist of carbon fibers.

7. Device according to claim 1, **characterized in that** the plastic material consists of polyvinyl chloride PVC.

8. Device according to one or more of claims 1 to 7, **characterized in that** the container (13) is designed as a tubular element with a substantially circular cross-section.

9. Device according to one or more of claims 1 to 7, **characterized in that** the inlet (14) for the mixture (11) to be separated is formed on the end element (19) receivable in the container (13) via the first opening side (130).

10. Device according to one or more of claims 1 to 9, **characterized in that** the outlet (15) for the permeate (10) generated by or in the membrane elements (12) is formed on the second end element (20) receivable in the container (13) via the second opening side (131).

11. Device according to one or more of claims 1 to 9, **characterized in that** the outlet (21) for the concentrated retentate (22) passed through membrane elements (12) and leaving the device (10) is formed on the second end element (20) receivable in the container (13) via the second opening side (131).

12. Device according to one or more of claims 9 to 11, **characterized in that** a second pressure element (23, 24) is arranged upstream of the second end element (19, 20) in the direction of the second opening side (131), which pressure element comes to bear at the second end element (19, 20).

13. Device according to one or more of claims 1 to 10, **characterized in that** the first and the second substantially plate-shaped end elements (19, 20) have a groove (32) surrounding its radial circumference for receiving a sealing element (33).

14. Device according to one or more of claims 1 to 13, **characterized in that** the membranes (12) in the container (13) are configured in the form of a wound membrane unit (34).

15. Device according to one or more of claims 1 to 13, **characterized in that** the membranes (12) in the container (13) are configured in the form of a flat membrane unit (35), wherein the flat membranes (35) are stacked on top of each other in the manner of a stack (36).

16. Device according to one or more of claims 1 to 14, **characterized in that** the membrane elements (12) are designed as cushion membranes.

17. Device according to one or more of claims 14 to 16, **characterized in that** the diaphragm unit (34, 35) is traversed axially by a clamping bolt (37).

18. Device according to claim 17, **characterized in that** the permeate (26) separated from the membranes (12) is guided to the permeate outlet (15) via the clamping bolt (37).

## Revendications

1. Dispositif (10) pour filtrer et séparer des mélanges (11) liquides se trouvant sous pression au moyen de membranes (12), comprenant un contenant (13) étanche à la pression, dans lequel les membranes (12) sont logées de manière étanche à la pression, ainsi qu'au moins une entrée (14) pour le mélange (11) et au moins une sortie (15) pour le perméat (16) séparé du mélange (11) au moyen des membranes (12) et au moins une sortie (21) pour le rétentat (18), dans lequel le contenant (13) étanche à la pression est constitué d'un matériau en matière synthétique,
dans lequel un premier élément d'extrémité (19) peut être logé par l'intermédiaire d'un premier côté d'ouverture (130) et un deuxième élément d'extrémité (20) peut être logé par l'intermédiaire d'un deuxième côté d'ouverture (131) dans le contenant (13), dans lequel un paquet des membranes (12) pouvant être introduit et logé dans l'espace intérieur (25) du contenant (13) peut être positionné de manière amovible sur le premier et le deuxième côté d'ouverture (130, 131) du contenant (13), avec respectivement une bague à sceau (26, 27), qui vient en prise de manière amovible avec respectivement une rainure périphérique (28, 29) respective réalisée dans la direction périphérique dans l'espace intérieur (25) du contenant (13), dans lequel une bride d'ajustement (30) en forme de disque est disposée entre la bague à sceau (26) sur le premier côté d'ouverture (130) du contenant (13) et un premier élément de pression (23) venant en appui sur le premier élément d'extrémité (19) et monté en amont de ce dernier en direction du premier côté d'ouverture (130), dans lequel la bride d'ajustement (30) présente une multitude de trous filetés (31) axiaux par rapport à l'axe (132) du contenant (13).

2. Dispositif selon la revendication 1, **caractérisé en ce que** la matière synthétique est constituée d'une résine époxy.

3. Dispositif selon la revendication 1, **caractérisé en ce que** la matière synthétique est constituée d'aramide[poly(1,4-phénylène-téréphtalamide)].

4. Dispositif selon l'une quelconque ou plusieurs des revendications 1 à 3, **caractérisé en ce que** la matière synthétique est renforcée par des fibres.

5. Dispositif selon la revendication 4, **caractérisé en ce que** les fibres de renforcement sont constituées de fibres de verre.

6. Dispositif selon la revendication 4, **caractérisé en ce que** les fibres de renforcement sont constituées de fibres de carbone.

7. Dispositif selon la revendication 1, **caractérisé en ce que** la matière synthétique est constituée de chlorure de polyvinyle (PVC).

8. Dispositif selon l'une quelconque ou plusieurs des revendications 1 à 7, **caractérisé en ce que** le contenant (13) est réalisé en tant qu'élément tubulaire avec une section transversale sensiblement circulaire.

9. Dispositif selon l'une quelconque ou plusieurs des revendications 1 à 7, **caractérisé en ce que** l'entrée (14) pour le mélange (11) à séparer est réalisée sur l'élément d'extrémité (19) pouvant être logé dans le contenant (13) par l'intermédiaire du premier côté d'ouverture (130).

10. Dispositif selon l'une quelconque ou plusieurs des revendications 1 à 9, **caractérisé en ce que** la sortie (15) pour le perméat (10) produit par ou dans les éléments de membrane (12) est réalisée sur le deuxième élément d'extrémité (20) pouvant être logé dans le contenant (13) par l'intermédiaire du deuxième côté d'ouverture (131).

11. Dispositif selon l'une quelconque ou plusieurs des revendications 1 à 9, **caractérisé en ce que** la sortie (21) pour le rétentat (22) concentré guidé à travers des éléments de membrane (12), quittant le dispositif (10) est réalisée sur le deuxième élément d'extrémité (20) pouvant être logé dans le contenant (13) par l'intermédiaire du deuxième côté d'ouverture (131).

12. Dispositif selon l'une quelconque ou plusieurs des revendications 9 à 11, **caractérisé en ce qu'**est disposé en amont du deuxième élément d'extrémité (19, 20) en direction du deuxième côté d'ouverture (131) un deuxième élément de pression (23, 24), qui vient en appui sur le deuxième élément d'extrémité (19, 20).

13. Dispositif selon l'une quelconque ou plusieurs des revendications 1 à 10, **caractérisé en ce que** le premier et le deuxième élément d'extrémité (19, 20) réalisés sensiblement en forme de disque présentent une rainure (32) entourant sa périphérie radiale, destinée à loger un élément d'étanchéité (33).

14. Dispositif selon l'une quelconque ou plusieurs des revendications 1 à 13, **caractérisé en ce que** les membranes (12) sont configurées dans le contenant (13) sous la forme d'une unité à membranes enroulées (34).

15. Dispositif selon l'une quelconque ou plusieurs des revendications 1 à 13, **caractérisé en ce que** les membranes (12) sont configurées dans le contenant (13) sous la forme d'une unité à membranes plates (35), dans lequel les membranes plates (35) sont empilées les unes sur les autres à la manière d'un empilement (36).

16. Dispositif selon l'une quelconque ou plusieurs des revendications 1 à 14, **caractérisé en ce que** les éléments de membrane (12) sont réalisés en tant que membranes à coussinet.

17. Dispositif selon l'une quelconque ou plusieurs des revendications 14 à 16, **caractérisé en ce que** l'unité à membranes (34, 35) est traversée axialement par un boulon de serrage (37).

18. Dispositif selon la revendication 17, **caractérisé en ce que** le perméat (26) séparé des membranes (12) est guidé vers la sortie de perméat (15) par l'intermédiaire des boulons de serrage (37).
